Europäisches Patentamt

European Patent Office

Office européen des brevets

(19)

(11) Publication number: **0 382 699**
**A2**

# EUROPEAN PATENT APPLICATION

(12)

(21) Application number: **90850052.3**

(22) Date of filing: **06.02.90**

(51) Int. Cl.5: **G06F 15/16**

(30) Priority: **07.02.89 US 307814**

(43) Date of publication of application:
**16.08.90 Bulletin 90/33**

(84) Designated Contracting States:
**DE FR GB**

(71) Applicant: **International Business Machines Corporation**
**Old Orchard Road**
**Armonk, N.Y. 10504(US)**

(72) Inventor: **Nuechterlein, David William**
**1205 Queenbury Circle**
**Durham, North Carolina 27713(US)**
Inventor: **Rinaldi, Mark Anthony**
**1201 Queensbury Circle**
**Durham, North Carolina 27713(US)**

(74) Representative: **Johansson, Lars E. et al**
**IBM Svenska AB, SW Intellectual Property Dept.**
**S-163 92 Stockholm(SE)**

(54) **Interprocessor data transfer system and method.**

(57) A system and method for managing a FIFO queue to allow tentative enqueuing of data entities. Additional memory pointers and control logic are provided to allow data entries to be added to a FIFO queue conditionally. Combinatorial logic allows the FIFO queue to be managed so that the tentative or conditional data entries may be purged as a group, committed or made permanent as a group. This system allows an increase in pipeline processor information transfer when several data entities to be transferred are related and the commitment to transfer the group cannot be made until after one or more of the group of data entities have been processed. Selector control are provided so that a system developer can implement management schemes to ensure that the desired function is implemented.

FIG.6

EP 0 382 699 A2

# INTERPROCESSOR DATA TRANSFER SYSTEM AND METHOD

## Background of the Invention

### 1. Field of the Invention

The present invention relates to interprocessor information transfer, and more particularly to an improved system and method for managing a queue of information being passed between processors in a pipeline configuration.

### 2. Description of Related Art

The use of data queues between processors for the purpose of managing the information transfer from one processor to the next is well known in the prior art. The use of first-in first-out (FIFO) queues, in particular, is known with the FIFO queue operating so that the sequence of data output from a first processor is input into a second processor in the same order.

FIFO queues and associated control logic can be implemented by hardware components or as a software system. The control logic for a FIFO queue typically includes a provision for tracking the next point in the queue into which data may be written by the first processor and the point in the queue from which data should be read by the second processor.

U.S. Patent 4,285,038 to Suzuki et al. illustrates the use of a FIFO queue to implement bidirectional information transfer between two processors. An article in the IBM Technical Disclosure Bulletin (TDB 02/83 pp. 4683-4689) entitled "FIFO Stack Operations" by D. G. Bourke describes a software implementation of operations to control a FIFO queue.

German Patent No. 3,048,250 to Guzmaneder illustrates the use of control logic circuits which further include controls indicating when the queue is ready to receive input and ready to provide output to the respective processors.

Finally, U.S. Patent 4,615,001 to W. R. Hudgins, Jr. exhibits the use of queue management control logic with multiple selectors for identifying points in the queue from which to unload a transaction, a point where the next transaction is to be loaded, and the point in the queue where initial processing has occurred.

A FIFO queue typically includes status signals indicating the status of the queue. The signals typically include a FULL indicator indicating that no more entries may be placed in the queue until an entry is removed, and a EMPTY indicator indicating that there are no entries in the queue and therefore the second processor must wait before accessing information from that queue.

The prior art FIFO queues and queue management systems perform adequately where each entry in the queue is independent from other entries. If the entries in the queue are somehow related, however, the prior art systems provide no means for managing related entries as a group. The management of related entries, therefore, must be accomplished within either the first or second processor and will frequently result in a reduced information transfer rate between the processors.

For example, in a graphics display system a displayable data point is frequently represented by three or more data points comprising, for example, the x, y, and z coordinates of that point. In an operation such as clipping, a determination must be made as to whether the point is within the clipping boundaries, i.e. within the x bounds, y bounds, and z bounds. A first processor element may be used to compare a coordinate to its respective bounds, for example the x coordinate to the x bounds. This operation can be pipelined so that a single processor first compares the x coordinate to the x bounds, then the y coordinate to the y bounds, and finally the z coordinate to the z bounds. A second processor is frequently coupled in series with the first processor to perform a subsequent operation on the data such as mapping the data to a display viewport screen.

The three data entries from the first processor cannot be passed to the second processor until it is determined that the group of three entries for that point is in fact within the bounds in all three dimensions. Once this determination is made, there is further delay as each of the three data entities is passed from the first to the second processor. Thus, if a boundary comparison operation consumes one processor clock interval, then three intervals are consumed in comparing the x, y and z bounds, and, if an additional processor cycle is required for transferring the data from the first processor to the second processor, an additional three cycles three intervals will be required to accomplish the transfer.

The information transfer throughput would be greatly increased if, after the first processor had compared the first point, that point could be placed on the FIFO queue for transfer to the second processor. In this way the comparison and the output processing steps could be overlaid or pipelined so that the entire compare and output sequence for the three points requires only three cycles. Prior art systems cannot be used in this manner because the comparison of the last data entry, e.g. the z coordinate to the z bounds, may indicate that the point is not within the clipping boundaries, and there is no way to remove the x and y data entries from the FIFO queue.

The present invention directed at providing a system and method for allowing increased information transfer between connected processors by allowing data entries to be tentatively placed on the FIFO queue and not removed by the subsequent processor until their presence has been confirmed or potentially until after any unwanted entries have been purged from the FIFO queue.


## Summary of the Invention


The present invention is defined in the attached claims.

The present invention is directed at providing a FIFO queue management system and method which supports the tentative enqueuing of data entities into the FIFO queue. The system allows a first processor to place a data entry on the queue subject to its later confirmation or removal. The invention provides control logic responsive to the first and second processors which allow the data entries to be placed tentatively on the queue, to be committed to the queue, to be purged from the queue, and to be read from the queue by the subsequent processor.

As a result of this inventive queue management system and method, information transfer throughput between two processors can be accomplished more rapidly.


## Brief Description of the Drawing


Fig. 1 is a block diagram showing the inventive queue management mechanism in relation to system processors.

Fig. 2 is a block diagram of prior art FIFO queue systems.

Fig. 3 is a block diagram of the state machine in the prior art queue management system.

Fig. 4 is a state transition diagram illustrating the transition of the prior art queue management system.

Fig. 5 is an illustration of FIFO queue storage and related pointers.

Fig. 6 is a block diagram of a FIFO queue management system according to the present invention.

Fig. 7 is a detailed logic diagram of a FIFO queue and related control logic for a system according to the present invention.

Fig. 8 is a state transition diagram illustrating the states of a system according to the present invention.

Fig. 9 is a logic diagram illustrating the function code translation according to the present invention.


## Description of the Preferred Embodiment


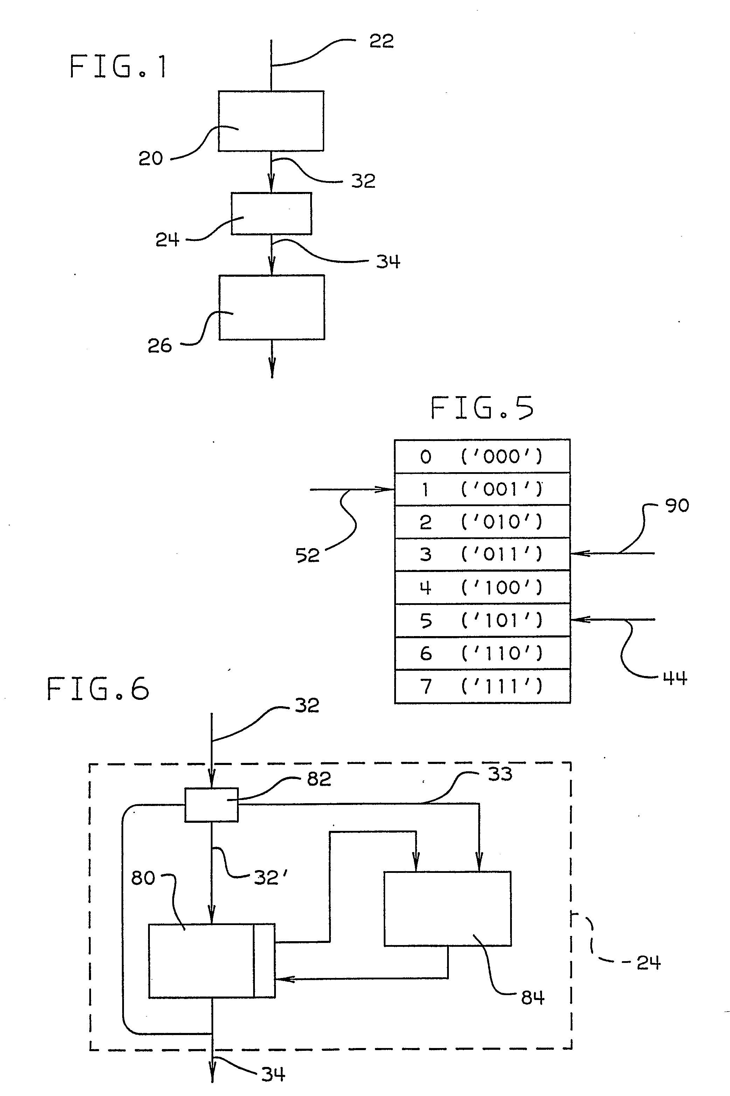

The present invention has been implemented in a graphics processing system to speed the operation of bounds checking. The portion of the graphics system of interest to the present invention is depicted in Fig. 1. A first processor 20 performs, for example, the bounds checking on coordinates of a point passed to the processor. Data is passed to processor 20 via data path 22 one coordinate at a time, e.g. x, y and z values. Processor 20 must compare the coordinate to the clipping boundaries for that coordinate, and, if accepted, pass the point to processor 26 for further processing. (This description discusses processing of the related data entries, the invention is applicable, however, to any number of related entities.) Each display point on a graphics display is represented by at least three data entries which are processed by processors 1 and 2, e.g. the x, y, and z coordinates of a point. Each of these coordinates is processed sequentially, however, because of the improved queue management apparatus and methods of the present

3

invention, each coordinate processed by processor 1 can be immediately passed to FIFO queue 24. If all three coordinates of a point are accepted by a processor 1, then the FIFO queue 24 is signalled to release the three coordinates for further processors at processor 2. If any of the three coordinate values exceed the respective bound, the data tentatively entered in FIFO queue 24 may be purged by processor 1.

For purposes of comparison, a FIFO queue constructed according to the prior art methods will now be discussed. Following this discussion an explanation of the enhanced queue management apparatus and process will be included.

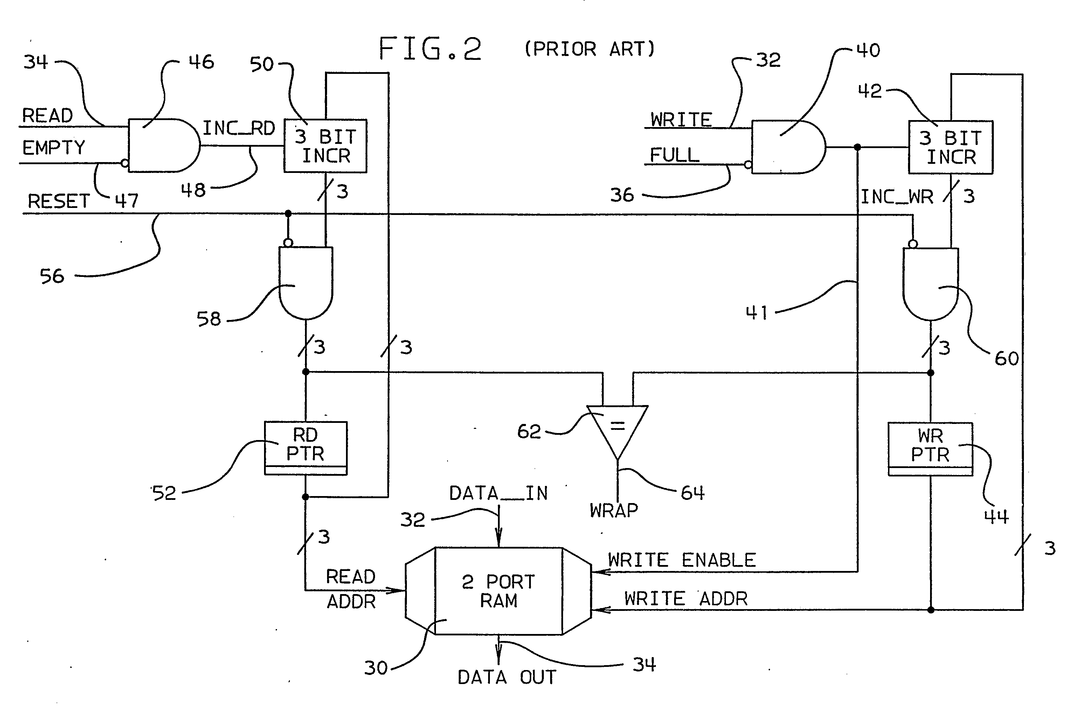

FIFO queue 24 may be implemented in a circuit such as that shown in Fig. 2. A two port random access memory (RAM) 30 is the key component of the FIFO system. The RAM is used for the storage of data passing from one processor to the next. The additional circuitry is used to control the entry of data entries into the RAM and the reading of entries out of the RAM. Data from processor 1 is passed by data path 32 to FIFO 24. Data from FIFO queue 24 is then passed to a subsequent processor on data path 34. Data paths 32 and 34 are bidirectional so that commands and data may be passed from each processor to the FIFO.

Writing of a data entry into FIFO 24 by processor 20 occurs as follows. Processor 20 will send a write request to the FIFO along with data to be written on data line 32. Logic circuit 40 will test to ensure that there is a write signal and the queue is not full. Incrementer 42 will increment the previous write pointer address and pass the value to write pointer register 44. Simultaneously a write enable signal 41 will be passed to the RAM 30. The presence of write pointer address 44 and write enable 41 will allow data in value on line 32 to be written into the FIFO RAM. If the FIFO buffer is full as shown by full signal 36, no action will be taken.

Processor 26 may read data from the FIFO queue by passing a read signal on data line 34 to the FIFO queue. Logic element 46 determines that a read signal is present and the FIFO is not empty and sets increment read signal 48. Empty signal 47 will be described in greater detail below. The increment read signal will cause a previously stored read address to be incremented by incrementer 50 and passed to the read pointer register 52. The read pointer value stored in 52 will be passed to the FIFO RAM 30 causing data to be output on data output line 34.

If the processing system is reset, a reset signal 56 will be passed to the FIFO queue. Logic units 58 and 60 cause the reader pointer register and writer pointer register respectively to be reset to zero.

Finally logic unit 62 is used to compare the incremented read pointer and write pointer and to test for equality, i.e. the read and write pointers point to the same position in the RAM. If equality is detected wrap signal 64 is generated. The equality of the reader and writer pointers can mean either that the queue is empty, i.e. the pointers are pointing to the beginning of the queue, or that the queue is full, i.e. the writer pointer has fully traversed the queue and is now pointing to the oldest element in the queue, the one remaining to be read.

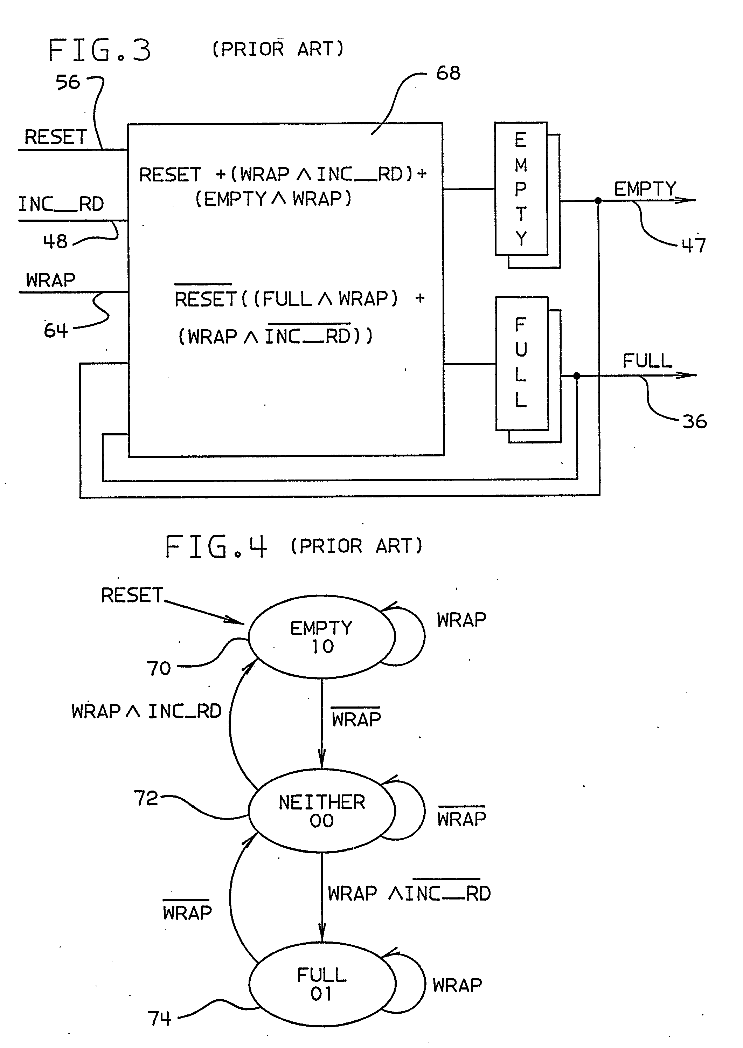

A simple state machine is used to determine whether the queue is in fact full or empty. The state machine is shown in Fig. 3 with a state diagram describing its operation in Fig. 4. As Fig. 3 shows state machine 68 has as inputs the reset signal 56, the read signal 48 and wrap signal 64. Based on these input values, state machine 68 generates empty signal 47 and full signal 36.

The state machine may be in one of three states as shown in Fig. 4. Each state is represented by a combination of two bits. Upon system reset the state machine enters empty state 70 which is encoded in two bits as '10'. As discussed above, the read pointer 52 and write pointer 54 are set to zero on reset and therefore comparator 62 will register equality and wrap signal 64 will be true. The state machine will remain in this state as long as the wrap signal remains true. As soon as the first element is written to the queue, the writer pointer 44 will be incremented which will cause an inequality of the reader pointer and cause the wrap signal to be false (NOT WRAP). Upon this occurrence, state machine moves to neither state 72 represented by the binary '00'. The "Neither" state is an intermediate state in which the queue is neither full nor empty. As long as wrap signal 64 remains false, the queue remains in state neither 72.

The wrap signal 64 may once again become true indicating equality of the reader pointer and writer pointer 44 because of one of two reasons: the second processor 26 has read a data item causing the read pointer to point at the same location that the write pointer is pointing to, indicating an empty queue; or the write pointer 44 has traversed the queue and wrapped around so that it is again pointing at the same location as the reader pointer, indicating that the queue is full. The state machine determines which of these conditions is true by testing the increment read signal 48. If increment read 48 is true and the wrap signal is on, then the last entry from the queue was just read and the queue is empty causing the state machine to return to empty state 70. If, on the other hand, the increment read signal is false this means that a read has not occurred, thus a write must have occurred to trigger the wrap signal 64 equality. In this case the queue is full causing passage to the full state 74. Once in full state 74, the state machine remains in that state as long as wrap signal is true. Once wrap signal is false, indicating that data has been read from the queue so that it is no longer full, then the queue passes back to neither state 72. This process then continues until the system is reset.

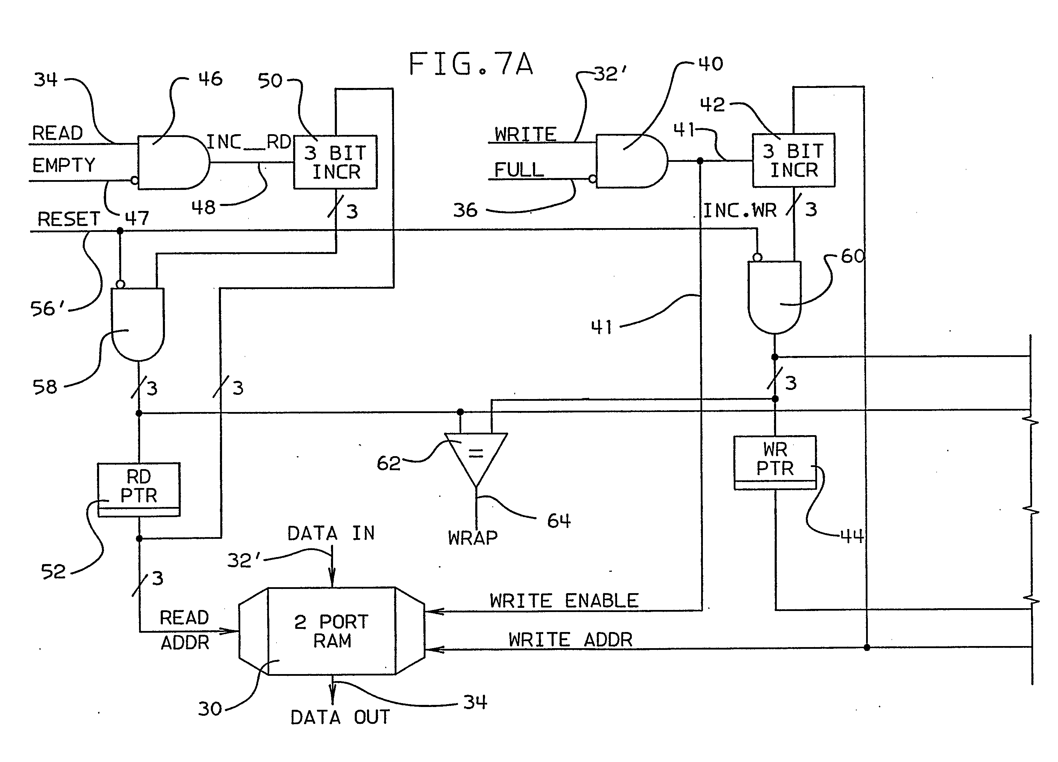

The logical structure of the FIFO queue represented physically by RAM 30 may be better understood by reference to Fig. 5. Fig. 5 shows a queue for containing, for example, eight entries numbered from 0 through 7. In the preferred embodiment the queue can contain eight such entries which can be addressed by a three bit binary address. In the preferred embodiment each of these entries is 33 bits long, allowing 32 data bits with a single bit to indicate whether a command or data is stored. The two pointers described above, the reader pointer 52 and write pointer 44 point to respective entries in this FIFO table. As shown in Fig. 5 read pointer pointer to entry number 1 indicating that this is the next entry to be read from the queue by processor 2. Write pointer 44 points to the position where the next entry to be written into the queue will be placed.

The enhanced FIFO queue management system according to the preferred embodiment of the present invention is shown in Fig. 6. Fig. 6 represents a high level block diagram of the major components of the inventive queue management system. FIFO store 80 contains the basic FIFO queue and associated control portion and is in many ways similar to the prior art FIFO queue described above. In addition, logic unit 82 has been added to determine whether a command for data has been passed to the FIFO unit. Finally, combinatorial logic unit 84 has been added to decode the selector commands passed to the FIFO queue management system. The FIFO store and combinatorial logic 84 will be described in greater detail below.

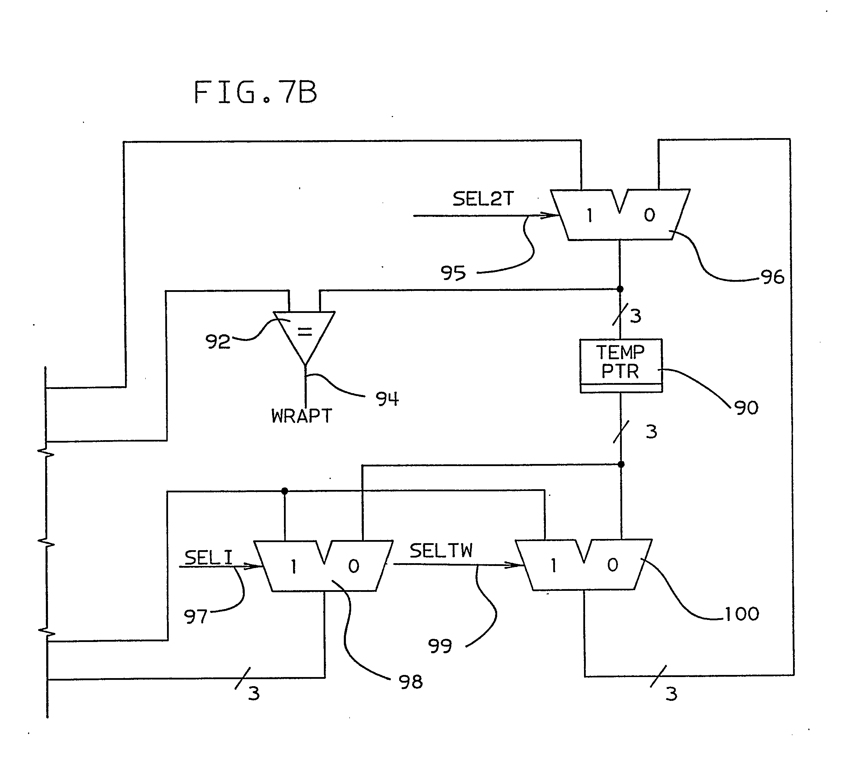

Fig. 7 is a block diagram of the system implementing enhanced FIFO store and control logic element 80. Elements which are identical to the elements of the prior art FIFO shown in Fig. 2 are represented by the same reference number. Reference number 32' has been added to indicate the data containing data stream passed as a result of the data/command analysis of logic unit 82. The like numbered components of Fig. 7 are shown analogously to those in Fig. 2. The new logic components will now be described.

The most significant feature of the enhanced FIFO queue management is the introduction of temporary pointer 90 which retains the location of the last data entity written before a series of tentative entries are written. Thus, if processor 1 is passing an entry to be tentatively placed on the FIFO queue, the value of write pointer 44 will be placed in temporary pointer 90 so that, if the tentative item is later purged, the queue pointer can be placed back to its previous location. Referring again to Fig. 5, temporary pointer 90 is pointing to cell 3. This indicates that, when a series of tentative entries were transmitted the write pointer 44 was pointing to cell 3 as the next available cell. The entries in cells 3 and 4 are therefore tentative entries which can either be committed or released removing them from tentative status or purged, in which case the write pointer should be returned to pointing at cell 3.

Multiplexers 96, 98, and 100 have been added to perform the transfers in response to commands on signals lines SEL2T 95, SELI 97, and SELTW 99 respectively. The generation and result of these commands will be described below.

The logic device 92 has been added to compare the read pointer 52 and temporary pointer 90 to generate a WRAPT signal 94 when they are equal.

The WRAPT signal 94 indicates whether the read pointer and temporary pointer are pointing to the same position in the FIFO queue. This occurs when there are no committed or permanent data entries. If wrap signal 64 is also true then there are not entries in the queue. However if wrap signal 64 is false, and WRAPT signal 94 is true, then there are tentative items in the queue but no committed or released items. Thus, if the items in the queue are only tentatively placed there, processor 2 will not be allowed to read these items until they become committed or released.

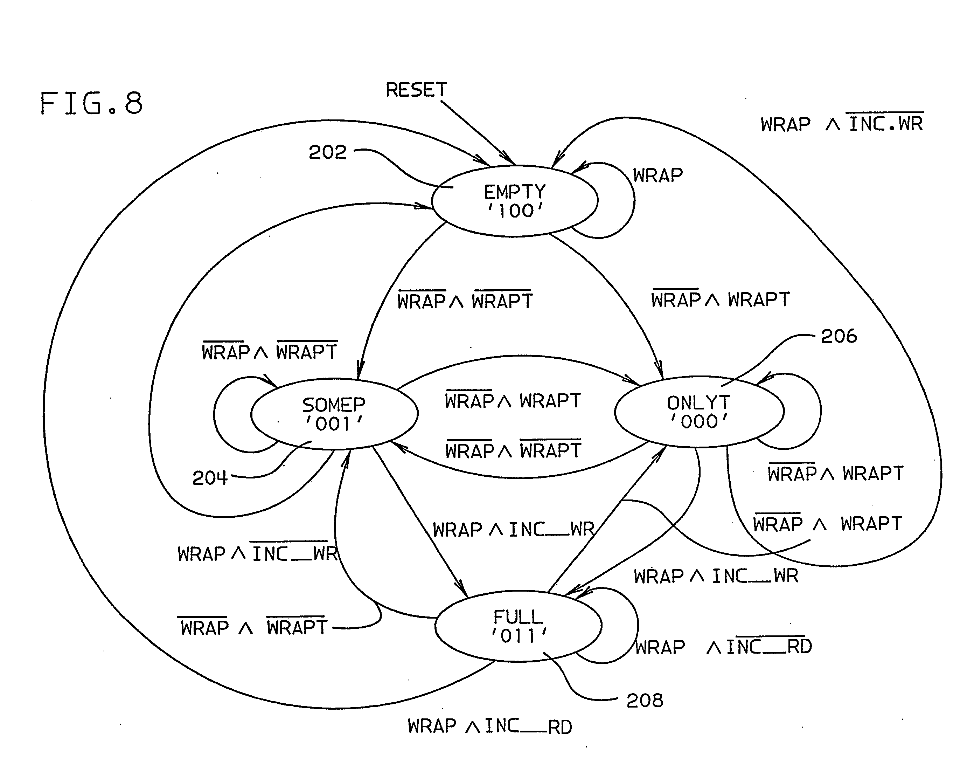

The operation of the FIFO queue is controlled by a state machine that is represented by a three bit value. Fig. 8 will be used to describe the operation of this state machine. Upon reset the queue is initially placed in empty state 202. Empty state is represented by binary '100'. As long as wrap signal 64 remains true, the queue stays in the empty state 202.

The queue becomes non-empty when either a tentative or fully committed entry is written into the queue. Writing of an entry into the queue will cause wrap signal 64 to become false (NOT WRAP). The queue will be in one of two states, state SOMEP 204 or ONLYT 206 depending whether a tentative or committed item was written into the queue. This can be determined by examining WRAPT signal 94. If WRAPT signal 94 is true, then a tentative items was written into the queue and the machine moved to ONLYT state 206 ('000'). If WRAPT is false then a permanent or committed item was written to the queue and the system moves to state SOMEP 204. The system remains in one of these states as long as the wrap and WRAPT signals remain constant.

A change in the WRAPT signal from true to false will cause the state to move from ONLYT 206 to SOMEP 204. Conversely a change from WRAPT being false to WRAPT being true will move the system from SOMEP 204 to ONLYT 206. The system will move to a full state 208 whenever a write occurs as indicated by increment write signal 41 which in turn causes the wrap signal to become true. As long as wrap remains true and an incremented read signal 48 remains false (indicating that no data has been read from the queue), the system will stay in the full state.

If wrap signal 64 becomes false, the system will return to state SOMEP 204 if WRAPT is false or to state ONLYT 206 is WRAPT is true. If WRAPT is true and incremented read 48 becomes true, the system will move to an empty state 202. This latter result occurs when there is one permanent entry and seven tentative entries in the queue and the seven tentative entries are purged in the same cycle that the single permanent or committed entry is read, therefore leaving the queue empty.

The state machine described above is encoded with three bits. Since there are only four states, the same result could have been achieved by using a two bit encoding technique. The use of a two bit encoding is fully within the invention, however, the three bit encoding is preferred to limit the amount of decoding circuitry required. The use of three bits allows simple encoding such that the first bit being on indicates empty, the last bit on indicates that permanent or committed data exists in the queue and the second bit indicates that the queue is full.

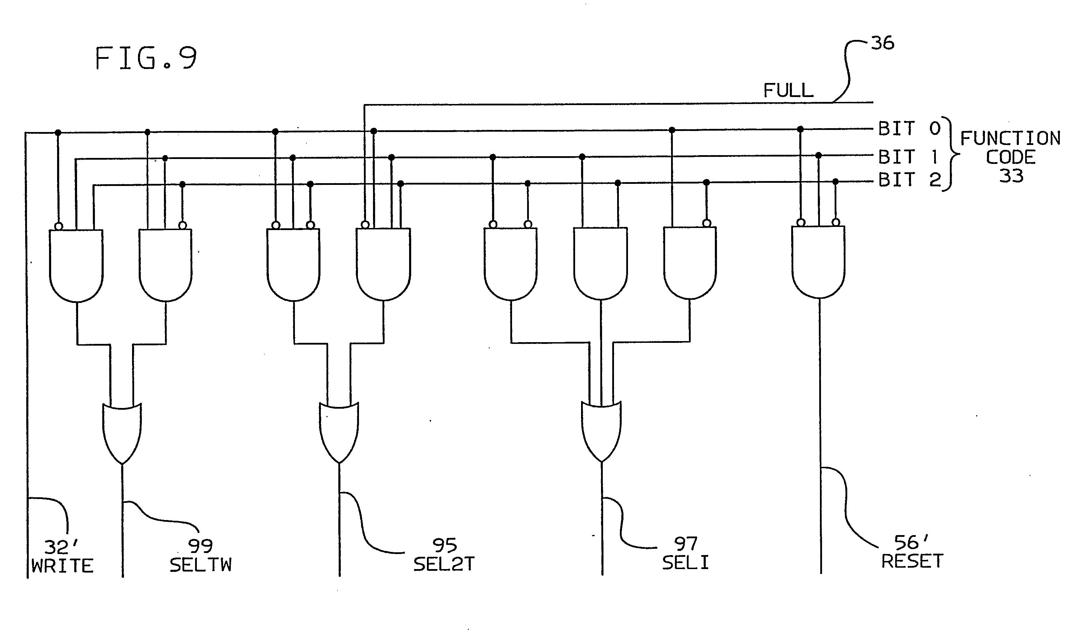

Fig. 9 is an implementation of combinatorial logic circuit 84 shown in Fig. 6. The purpose of this logic circuit is to decode a functional code sent by one of the processors to control the queue. The data command 33 from the command/ data splitter 82 is passed into combinatorial logic 84. In addition, the full signal 36 is passed to the logic device. The function code on line 33 is decoded to provide the selector options as shown in Table 1 below.

TABLE 1

| CODE | NAME | DESCRIPTION |
| --- | --- | --- |
| 000 | NOOP | No writes occur |
| 001 | PURGE | Discard any temporary data |
| 010 | RESET | Reset the state machine and set all pointers to 0 |
| 011 | RELEASE | Make all temporary data permanent |
| 100 | WRITET | Write data as temporary |
| 101 | P + WRITET | Discard any temporary data, then add a new item as temporary |
| 110 | R + WRITET | Make all the temporary data permanent, then add a new item as temporary |
| 111 | WRITE | Make any temporary data permanent, then add a new item as permanent |

The selector controls operate as described below.

6

| FUNCTION | DESCRIPTION | NEW WR | NEW TEM |
|---|---|---|---|
| NOOP | SELI routes the WR pointer to the incrementer. SELTW and SEL2T route the TEMP pointer back to itself. Since no write, the incrementer adds 0. | WR+0 | TEMP |
| PURGE | SELI routes the TEMP pointer to the incrementer. SELTW and SEL2T route the TEMP pointer back to itself. Since no write, the incrementer adds 0. | TEMP+0 | TEMP |
| RESET | SEL2T routes the incrementer to the TEMP pointer. Since RESET is active, AND gates force zeros. | 0 | 0 |
| RELEASE | SELI routes the WR pointer to the incrementer. SELTW and SEL2T route the WR pointer back to the TEMP pointer. Since no write, the incrementer adds 0. | WR+0 | WR |
| WRITET | SELI routes the WR pointer to the incrementer. SELTW and SEL2T route the TEMP pointer back to itself. The incrementer adds 1 if not full. If full, this performs the NOOP function (WR=WR+0, TEMP=TEMP). | WR+1 | TEMP |
| P+WRITET | SELI routes the TEMP pointer to the incrementer. SELTW and | TEMP+1 | TEMP |

7

SEL2T route the TEMP pointer back to itself. The incrementer adds 1 if not full. If full, this performs the PURGE function (WR=TEMP, TEMP=TEMP).

| | | | |
|---|---|---|---|
| R+WRITET | SELI routes the WR pointer to the incrementer. SELTW and SEL2T route the non-incremented WR pointer to the TEMP pointer. The incrementer adds 1 if not full. If full, this performs the RELEASE function ((WR=WR, TEMP=WR). | WR+1 | WR |
| WRITE | SELI routes the WR pointer to the incrementer. SEL2T routes the incremented WR pointer to the TEMP pointer if the FIFO is not full, else the SELTW and SEL2T route the TEMP pointer back to itself. The incrementer adds 1 if not full. If full, this performs the NOOP function (WR=WR, TEMP=TEMP). | WR+1 | WR+1 |

The function code assignments were chosen such that the high order bit of the function code is a 1 for all of the functions that cause a write. Write line 32' indicated in Fig. 7 is therefore this highest order bit of the function code.

The selector controls are used by the programmer implementing a specific function of the processor pipeline. The program would typically be developed in system microcode by the initial system developer although, in certain instances, the FIFO queue could be under the control of an application program. The selector controls allow the programmer to manage the FIFO queue in accordance with the particular function it is sought to be implemented. As an example, the situation discussed above where the x, y and z coordinates are examined and passed to the second processor, would allow use of the FIFO queue in the following way.

After processor 20 examines the x coordinate and determines that it is within bounds, it is written to the FIFO queue using the control WRITET, causing the data to be entered into the queue as tentative or temporary data. Processor 20 will next examine the y coordinate. If the y coordinate fails the bounds test then no data will be written to the queue and the x value currently on the queue will need to be purged. In this case a PURGE control will be sent to the FIFO queue causing the write pointer to be reestablished and effectively purging the x coordinate from the queue. If, on the other hand, the y coordinate is within bounds it will be written to the FIFO queue with the WRITET instruction. Examination of the z coordinate could also lead to a purging of the existing two FIFO entries or if the z coordinate is within bounds then the WRITE selector control will be used to make the two temporary data items permanent as well as adding the new z item as a permanent queue entry. The other commands can be used in a similar manner depending on the logic which must be implemented for a particular function.

The above description is of the preferred embodiment of the FIFO queue management system according to the present invention. This system and method can be implemented using many different hardware and software components and any of these alternative implementations are deemed to be within the scope of the invention. In particular, the replacement of hardware components with software implementations is fully within the inventive concept described.

In an alternative embodiment of the present invention, each processor element in a series of processors contains a FIFO queue on its input and output sides. The present invention would be used to develop the FIFO queue for the output side of the processor in this configuration. The input FIFO queue would be constructed according to prior art principles.

**Claims**

1. An interprocessor data transfer system for transferring data from a first to a second processor, said system comprising:
storage means for storing a plurality of data entities, said stored data entities being classified as either permanent or tentative;
circuit means connecting said storage means to said first processor and to said second processor;
control means for managing said storage means, said control means responsive to said first and second processors;
said control means further comprising:
a first indicator means for indicating the location in the storage means for the placement of a next data entity written by said first processor;
second indicator means for indicating the location in the storage means for the reading of a next data entity by said second processor;
third indicator means for indicating the location of a last permanent data entity in said storage means
means for incrementing said first or second indicator in response to a command from said first or second processor;
means responsive to said first processor for purging tentative data entities from said storage means by setting said first indicator equal to said second indicator;
means responsive to said first processor for transforming tentative data entities into permanent data entities by setting said second indicator equal to said first indicator; and
means for signalling storage means status by indicating when said storage means is empty, has some permanent data entities, has only tentative data entities, or is full.

2. The system according to claim 1 wherein said storage means is a two port random access memory.

3. The system according to claim 1 further comprising:
first comparator means for comparing said first indicator and said second indicator and signalling equality when they are equal;
second comparator means for comparing said second indicator and said third indicator and signalling equality when they are equal;
first means for signalling when data has been read from said storage means;
second means for signalling when data has been written to said storage means; and
wherein said means for signalling storage status is responsive to said first comparator signal, said second comparator signal, and said first and second means for signalling.

4. The system according to claim 1 further comprising:
logic means for decoding a function requested by said first or second processor.

5. An information transfer method for transferring data from a first to a second processor using a FIFO queue, said method comprising the steps of:
transmitting a selector control and data entity from said first processor to said FIFO queue;
decoding said selector control to form a selector signal;
storing an indicator indicating a next permanent entity location in said FIFO queue if said selector signal indicates a tentative data entity is being written;
storing said data entity in said FIFO queue at a next available storage location as indicated by a first storage location indicator if said selector signal indicates data to be written;
incrementing said first storage location indicator if said selector signal indicates data to be written;
storing said indicator indicating a next permanent entity location in said first storage location indicator if said selector signal indicates purging of tentative data;
storing said first storage indicator in said indicator indicating a next permanent data entity location if said selector signal indicates said tentative data is to be made permanent;

9

transferring a data entity at a FIFO queue storage location indicated by a second storage location indicator to said second processor if said selector signal indicates data is to be read; and

incrementing said second storage location indicated if said selector signal indicates data is to be read.

6. The method of claim 5 further comprising the steps of:

comparing said first storage location indicator and said second storage location indicator and generating a first equality signal if they are equal;

comprising said indicator indicating a next permanent data entity location and generating a second equality signal;

signalling queue status to said first and second processors based on said first and second equality signals and on said selector signal.

7. The method of claim 5 further comprising reset means for resetting said first and second indicators and said indicator indicating a next permanent entity location in said queue to zero.

FIG.1

FIG.5

| 0 | ('000') |
|---|---------|
| 1 | ('001') |
| 2 | ('010') |
| 3 | ('011') |
| 4 | ('100') |
| 5 | ('101') |
| 6 | ('110') |
| 7 | ('111') |

FIG.6

# FIG.2 (PRIOR ART)

EP 0 382 699 A2

FIG.3   (PRIOR ART)

56

RESET

INC_RD

48

WRAP

64

68

$$RESET + (WRAP \wedge INC\_RD) + (EMPTY \wedge WRAP)$$

$$\overline{RESET}((FULL \wedge WRAP) + (WRAP \wedge \overline{INC\_RD}))$$

E M P T Y

EMPTY

47

F U L L

FULL

36

FIG.4   (PRIOR ART)

RESET

EMPTY
10

WRAP

70

$\overline{WRAP}$

$WRAP \wedge INC\_RD$

72

NEITHER
00

$\overline{WRAP}$

$\overline{WRAP}$

$WRAP \wedge \overline{INC\_RD}$

FULL
01

WRAP

74

FIG.7A

EP 0 382 699 A2

FIG. 7B

FIG.8

EP 0 382 699 A2

# FIG.9

FULL ⌐36

BIT 0 ⎫
BIT 1 ⎬ FUNCTION
BIT 2 ⎭ CODE
         33

32'
WRITE

99
SELTW

95
SEL2T

97
SELI

56'
RESET

EP 0 382 699 A2